## Europäisches Patentamt

## European Patent Office

## Office européen des brevets

(11) Veröffentlichungsnummer: **0 119 544**
**B1**

(12) **EUROPÄISCHE PATENTSCHRIFT**

(45) Veröffentlichungstag der Patentschrift:
16.07.86

(51) Int. Cl.⁴: **G 21 C 3/32**

(21) Anmeldenummer: **84102387.2**

(22) Anmeldetag: **06.03.84**

(54) Brennelement mit quadratischem Querschnitt für wassergekühlte Kernreaktoren.

(30) Priorität: **16.03.83  DE 3309449**

(43) Veröffentlichungstag der Anmeldung:
**26.09.84 Patentblatt 84/39**

(45) Bekanntmachung des Hinweises auf die Patenterteilung:
**16.07.86 Patentblatt 86/29**

(84) Benannte Vertragsstaaten:
**CH DE FR IT LI SE**

(56) Entgegenhaltungen:
**CH - A - 472 093**
**DE - A - 3 215 363**
**FR - A - 2 154 753**
**US - A - 2 990 351**

(73) Patentinhaber: **KRAFTWERK UNION AKTIENGESELLSCHAFT, Wiesenstrasse 35, D-4330 Mülheim (Ruhr) (DE)**

(72) Erfinder: **Suchy, Peter, Dipl.-Ing., Anderlohrstrasse 48, D-8520 Erlangen (DE)**

(74) Vertreter: **Mehl, Ernst, Dipl.-Ing. et al, Postfach 22 01 76, D-8000 München 22 (DE)**

## Beschreibung

Die Erfindung betrifft ein Brennelement mit quadratischem Querschnitt für wassergekühlte Kernreaktoren, mit Brennstäben, die in einem quadratischen Raster angeordnet sind, das durch Abstandshalter mit quadratischen Gittermaschen vorgegeben ist, wobei an einzelnen, vom Rand des Brennelementquerschnitts entfernten Rasterpositionen brennstofffreie Stäbe zur Änderung des Moderationsverhältnisses angeordnet sind.

Ein solches Brennelement ist zum Beispiel aus der US-A 3802995 bekannt. In der Fig. 7 sind etwa in der Mitte des für einen Siedewasserreaktor vorgesehenen Brennelements im Bereich von Brennstäben, die Plutonium enthalten, zwei sogenannte Wasserstäbe in der Nähe des Zentrums des Brennelementquerschnittes auf einer Diagonalen benachbart angeordnet. Dies sind Stäbe, die in dem Abstandshalter an normalen Stabpositionen sitzen, aber zur Änderung des Moderationsverhältnisses keinen Brennstoff enthalten sondern Wasser. Der kreisförmige Querschnitt der Wasserstäbe stimmt mit dem Querschnitt der Brennstäbe überein. Unterschiedlich ist lediglich, dass das den Wasserstab bildende Rohr mehrere Öffnungen am unteren und oberen Ende hat, durch die eine Verbindung mit dem die Brennstäbe umströmenden Kühlwasser gegeben ist.

Die Erfindung geht von der Aufgabe aus, eine stärkere Änderug des Moderationsverhältnisses zu ermöglichen, ohne dass der sonstige Aufbau des Brennelements verändert werden muss.

Gemäss der Erfindung ist vorgesehen, dass die brennstofffreien Stäbe einen quadratischen Querschnitt aufweisen, der nur um das zum Ein- und Ausbau dieser brennstofffreien Stäbe notwendige Spiel kleiner als der Querschnitt der Gittermaschen ist.

Mit der Erfindung wird der durch die brennstofffreien Stäbe bestimmte Querschnitt zur Änderung des Moderationsverhältnisses vergrössert. Zugleich ergibt sich dabei der Vorteil, dass auch die Kühlmittelströmung im Bereich der den brennstofffreien Stab einschliessenden Gittermasche verringert wird, so dass die Aufheizung im Brennelement vergrössert wird. Dieser Vorteil ist nicht nur dann zu nutzen, wenn der brennstofffreie Querschnitt das Kühlwasser selbst als Moderator einschliesst, sondern auch für den Einsatz besonderer Moderatoren, zum Beispiel Zirkonhydrid, Zirkonoxid, Beryllium oder $D_2O$.

Für den Fall, dass der Querschnitt der brennstofffreien Stäbe durch ein Hüllrohr bestimmt ist, kann dieses vorteilhaft einen Querschnitt mit quadratischem Aussen- und zylindrischem Innenrand aufweisen. Dies gilt besonders für den Fall, dass ein Feststoffmoderator eingesetzt wird, der in Form von zylindrischen Tabletten leichter herzustellen und einzufüllen ist als bei einem Hüllrohr, dessen Innenrand entsprechend dem Aussenquerschnitt ebenfalls quadratisch ist.

Die Erfindung kommt insbesondere für Siedewasserreaktoren in Frage und wird dann vorteilhaft in der Form verwirklicht, dass die brennstofffreien Stäbe mit quadratischem Querschnitt symmetrisch, insbesondere kreuzförmig zum Zentrum des Brennelementquerschnittes angeordnet sind, wo die höchste lokale Dampfproduktion vorhanden ist.

Zur näheren Erläuterung der Erfindung werden anhand der beiliegenden Zeichnung Ausführungsbeispiele beschrieben. Dabei zeigen die Fig. 1 und 2 zwei Querschnitte durch Brennelemente von Siedewasserreaktoren, während die Fig. 3 und 4 zwei unterschiedlich geformte Hüllrohre für brennstofffreie Stäbe im Querschnitt darstellen.

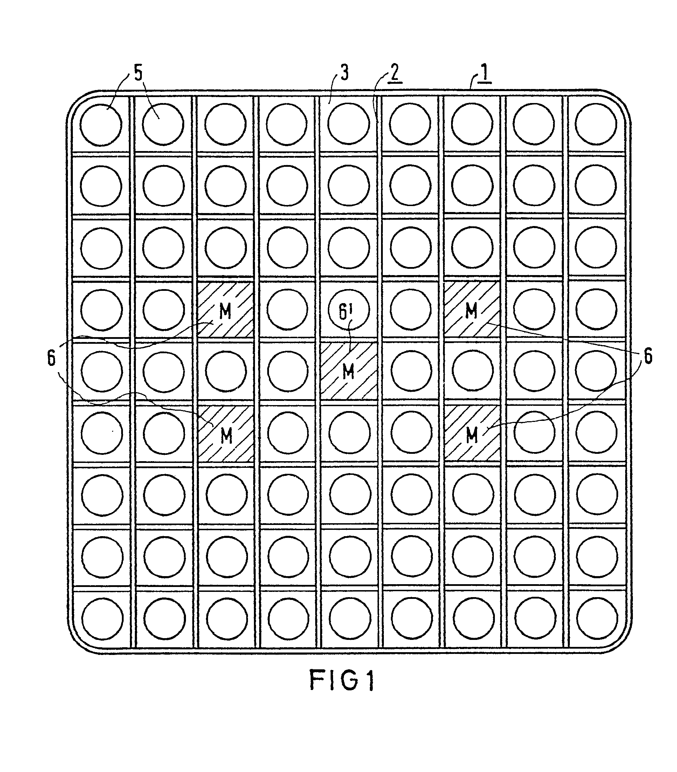

Das in Fig. 1 dargestellte Brennelement 1 hat einen quadratischen Querschnitt mit einer Kantenlänge von 132,5 mm. Darin ist in einem quadratischen Raster durch Abstandshalter 2 mit im Querschnitt quadratischen Gittermaschen 3 Platz für die Aufnahme von Brennstäben 5 in einem Bündel von 9 × 9 Stäben geschaffen. Die Brennstäbe 5 haben einen Durchmesser von 10,75 mm und sind mit Uranoxidpellets versehen.

Neben den Brennstäben 5 enthält das Brennelement nach Fig. 1 fünf brennstofffreie Stäbe 6, die symmetrisch im Zentrum des Brennelementquerschnittes angeordnet sind, und zwar mit einem zentralen Stab 6' und vier Stäben 6, die, wie man sieht, im Abstand von einer Gittermasche 3 von dem zentralen Stab 6' angeordnet sind, so dass sie gemeinsam ein Rechteck definieren, dass sich an der Schmalseite über drei Gittermaschen und an der Längsseite über fünf Gittermaschen erstreckt.

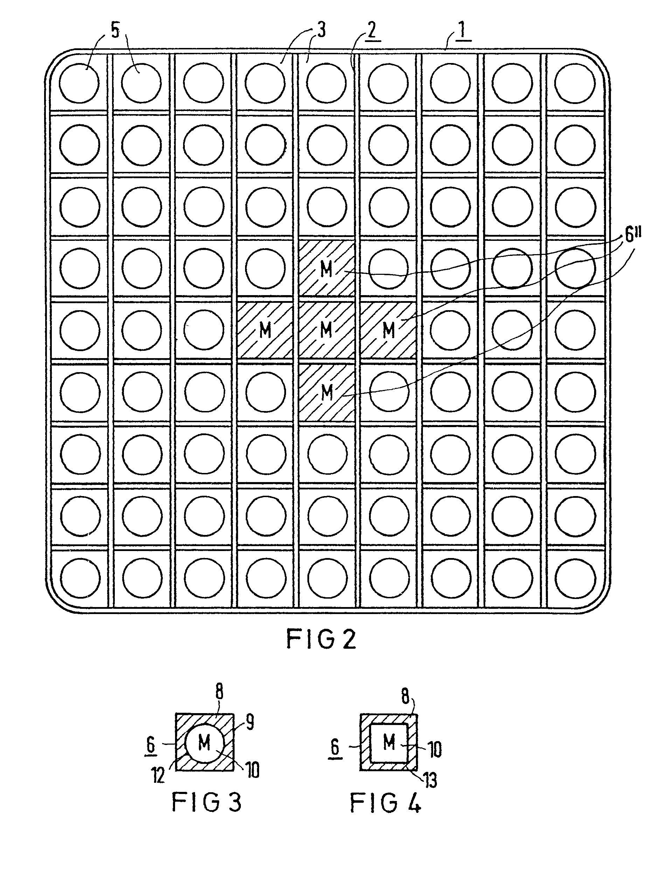

Die Fig. 2 zeigt eine andere Ausführungsform der Erfindung. Hierbei sind vier brennstofffreie Stäbe 6'' unmittelbar aneinander angrenzend in Form eines Kreuzes im Zentrum des Brennelements 1 angeordnet. Die übrigen siebenundsiebzig Gittermaschen 3 des Abstandshalters 2 sind wiederum mit Brennstäben 5 besetzt.

In den Fig. 1 und 2 ist deutlich dargestellt, dass sich der Querschnitt der brennstofffreien Stäbe praktisch vollständig mit dem quadratischen Querschnitt der Gittermaschen 3 deckt. Er braucht jedenfalls nur um soviel kleiner zu sein, dass die Stäbe 6 bei einem gegebenen Abstandshalter leicht ein- und/oder ausgebaut werden können. Beträgt zum Beispiel die Kantenlänge einer Gittermasche 14,3 mm, so kann die Kantenlänge des Querschnitts der brennstofffreien Stäbe 6 13,7 mm sein.

In den Fig. 1 und 2 ist der Querschnitt der Stäbe 6 durch eine gleichmässige Schraffur so dargestellt, als wäre der damit angedeutete Moderator M zur Änderung des Moderationsverhältnisses gleichmässig verteilt. Dies kann auch tatsächlich der Fall sein, wenn als Moderator zum Beispiel Beryllium verwendet wird. Die Fig. 3 und 4 zeigen jedoch, dass man auch brennstofffreie Stäbe 6 mit einem Hüllrohr 8 verwenden kann, das einen Querschnitt mit quadratischem Rand 9 hat. Der Innenraum 10 der Hüllrohre 8 hat bei der Ausführungsform nach Fig. 3 einen kreisförmigen Rand 12, so dass der darin enthaltene Moderator, zum Beispiel in Form von zylindrischen Tabletten, gut festgelegt ist. Die Fig. 4 zeigt jedoch, dass das Hüllrohr 8 der Stäbe 6 auch einen Innenraum 10 haben kann, dessen Rand 13 ebenfalls quadratisch ist, so dass sich eine gleichmässige Wanddicke für das Hüllrohr 8 ergibt.

## Patentansprüche

1. Brennelement mit quadratischem Querschnitt für wassergekühlte Kernreaktoren, mit Brennstäben, die in einem quadratischen Raster angeordnet sind, das durch Abstandshalter mit quadratischen Gittermaschen vorgegeben ist, wobei an einzelnen, vom Rand des Brennelementquerschnittes entfernten Rasterpositionen brennstofffreie Stäbe zur Änderung des Moderationsverhältnisses angeordnet sind, dadurch gekennzeichnet, dass die brennstofffreien Stäbe (6) einen quadratischen Querschnitt aufweisen, der nur um das zum Ein- und Ausbau dieser Stäbe (6) notwendige Spiel kleiner als der Querschnitt der Gittermaschen (3) ist.

2. Brennelement nach Anspruch 1, dadurch gekennzeichnet, dass die brennstofffreien Stäbe (6) Hüllrohre (8) und ein von diesen eingeschlossenes Moderatormaterial umfassen.

3. Brennelement nach Anspruch 2, dadurch gekennzeichnet, dass die Hüllrohre (8) einen Querschnitt mit quadratischem Aussen- und zylindrischen Innenrand (9, 12) aufweisen (Fig. 3).

4. Brennelement nach Anspruch 1, 2 oder 3, dadurch gekennzeichnet, dass die brennstofffreien Stäbe (6) symmetrisch, insbesondere kreuzförmig zum Zentrum des Brennelementquerschnitts angeordnet sind.

## Claims

1. A fuel element, having a square cross-section, for water-cooled nuclear reactors with fuel rods which are arranged in a square raster represented by spacers with square grid meshes, where fuel-free rods for changing the moderation proportions are arranged at individual raster positions which are spaced from the edge of the cross-section of the fuel element, characterized in that the fuel-free rods (6) have a square cross-section which is smaller than the cross-section of the grid meshes (3) by only the clearance necessary for the assembly and disassembly of said rods (6).

2. A fuel element as claimed in Claim 1, characterized in that the fuel-free rods (6) comprise encasing pipes (8) and a moderator material which is surrounded by said pipes.

3. A fuel element as claimed in Claim 2, characterized in that the encasing pipes (8) have a cross-section with a square external and cylindrical internal periphery (9, 12) (Fig. 3).

4. A fuel element as claimed in Claim 1, 2 or 3, characterized in that the fuel-free rods (6) are arranged symmetrically, in particular in a cross-shaped manner, with respect to the centre of the cross-section of the fuel element.

## Revendications

1. Assemblage combustible de section droite carrée pour des réacteurs nucléaires refroidis à l'eau comprenant des crayons combustibles qui sont disposés suivant un réseau carré prédéterminé par des entretoises à mailles de grille carrées, des crayons exempts de combustible étant disposés en certaines positions du réseau éloigné du bord de la section droite de l'assemblage combustible en vue de modifier le rapport de modération, caractérisé en ce que les crayons (6) exempts de combustible présentent une section droite carrée qui n'est inférieure à la section droite de la maille (3) de la grille que du jeu nécessaire au montage et au démontage de ces crayons (6).

2. Assemblage combustible suivant la revendication 1, caractérisé en ce que les crayons (6) exempts de combustibles entourent des tubes-enveloppes (8) et une substance modératrice enfermée par ceux-ci.

3. Assemblage combustible suivant la revendication 2, caractérisé en ce que les tubes-enveloppes (8) présentent une section droite à bord extérieur (9) carré et à bord intérieur (12) cylindrique (figure 3).

4. Assemblage combustible suivant la revendication 1, 2 ou 3, caractérisé en ce que les crayons (6) exempts de combustible sont disposés de manière symétrique notamment en forme de croix par rapport au centre de la section droite de l'assemblage combustible.

FIG 1

FIG 2

FIG 3

FIG 4